# EUROPEAN PATENT SPECIFICATION

(11) **EP 1 653 705 B1**
(45) Date of publication and mention of the grant of the patent: **28.11.2007**
(21) Application number: 05292216.8
(22) Date of filing: 21.10.2005
(51) Int. Cl.: H04L 29/08, G07B 17/00

(54) **Method for establishing communication between a data processing device and a remote data processing center**
Verfahren zum Verbindungsaufbau zwischen einem Datenverarbeitungsterminal und einem entfernten Datenverarbeitungscenter
Procédé pour l'établissement d'une communication entre un terminal de traitement de données et un centre de traitement de données distant

(30) Priority: 28.10.2004 US 623071 P; 31.01.2005 US 47292
(43) Date of publication of application: 03.05.2006
(73) Proprietor: NEOPOST TECHNOLOGIES, 92220 Bagneux (FR)
(72) Inventor: Brookner, George M., Norwalk, Connecticut 06851 (US)
(74) Representative: David, Alain

(56) References cited:
- EP-A- 1 401 176
- US-A1- 2003 074 325
- US-B1- 6 785 724
- "Specification of the Bluetooth system, wireless connections made easy, Core, Version 1.1" SPECIFICATION OF THE BLUETOOTH SYSTEM, XX, XX, vol. 1, 22 February 2001 (2001-02-22), pages 92-125, XP002223350
- THE UNITED STATES POSTAL SERVICE (USPS): "Information-based indicia program (IBIP) - Performance criteria for information-based indicia and security architecture for open IBI postage evidencing systems (PCIBI-O)"[Online] 23 February 2000 (2000-02-23), pages 1-79, XP002361498 Internet Retrieved from the Internet: URL:http://www.cs.berkeley.edu/~tygar/pape rs/IBIP/Open_Performance_Criteria.pdf> [retrieved on 2006-01-04]

## Description

This application claims the benefit of U.S. Provisional Application No. 60/623,071 filed October 28, 2004.

### BACKGROUND

The disclosed exemplary embodiments are related to communications between a remote data processing device and a host data processing service center.

### Brief Description of Related Developments

A high volume postal customer may use a meter which incorporates a Postal Security Device (PSD) to secure the proof of payment of postal indicia. In an exemplary application, indicia may be applied to mailing items that identifies the value of the postage applied and other information. A customer may purchase postage and the purchased value may be stored in the PSD. As the postage indicia is applied to items, the value applied may be deducted from the stored value. Once postage indicia is applied, the item may then be dropped into the collection stream of the particular postal system and subsequently processed for delivery.

A meter generally communicates with a remote data center to have funds replenished, to update data tables, or to add or update features. This communication is generally initiated by the meter. Typically, in order to cause the communications session to be established, a common practice is to set a counter within the meter to a predetermined time period and to operate the counter to count to the predetermined time period using a real-time clock within the meter. When the counter reaches the predetermined time period, the data processing device may automatically initiate a connection with the host data processing service center connection and request an information transfer.

It would be advantageous to improve upon this methodology and to obviate the need for a real-time clock or counter system to determine when to initiate contact with the host data processing service center.
The section "Channel control" of the specification of the Bluetooth System, wireless connections made easy, are, version 1.1, vol 1, dated 22 February 2001, XP 2223350, describes how the channel of a piconet is established and how units can be added to and released from the piconet. Several states of operation of the Bluetooth units are defined to support these functions. In addition, the operation of several piconets sharing the same area, the so-called scatternet, is discussed. A special section is attributed to the Bluetooth clock which plays a major role in the FH synchronization.
In the document EP 1 401 176 A2, a relay device (20) is disclosed, which can enable push type services suited to a network. The relay device (20) includes a connection detection section (201) that detects a mobile device (30) that is in a state in which the mobile device (30) can transmit/receive information through a mobile communication network (1), and a notification transmission section (202) for transmitting a result of the detection to a mail server (10) that transmits mail information to the mobile device (30).

### SUMMARY OF THE EXEMPLARY EMBODIMENTS

The present invention provides a method of establishing communication between a host data processing service center and a remote data processing device, as defined in independent claim 1.

The exemplary embodiments are directed to a method of establishing communication between a host data processing service center and a remote data processing device includes appending to a remote data processing device message request process, additional messaging information and content as required by the host data processing service center to either request data from the remote data processing device or provide data to the remote data processing device if the remote data processing device is not capable of monitoring communications and recognizing and acknowledging communications directed to itself, and sending the remote data processing device a request to contact the host data processing service center if the remote data processing device 115 is capable of monitoring communications recognizing and acknowledging communications directed to itself.

### BRIEF DESCRIPTION OF THE DRAWINGS

The foregoing aspects and other features of the present invention are explained in the following description, taken in connection with the accompanying drawings, wherein:

Figure 1 shows a block diagram of a system suitable for practicing the invention; and

Figure 2 shows an exemplary remote data processing device for operation within the system of Figure 1.

### DETAILED DESCRIPTION OF THE EXEMPLARY EMBODIMENTS

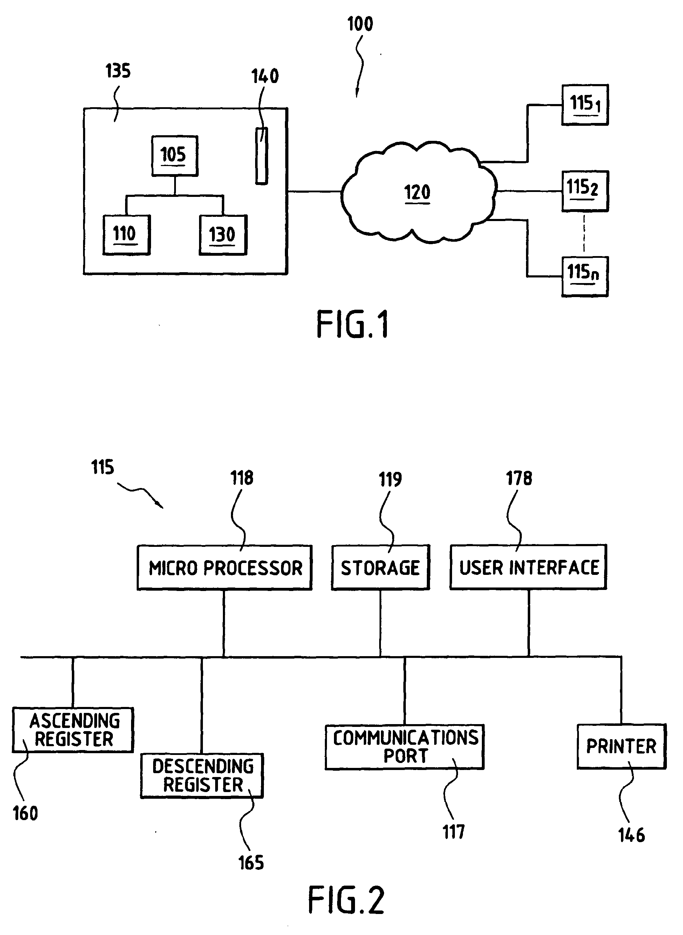

Figure 1 shows a block diagram of a system suitable for practicing the invention disclosed herein. Although the present invention will be described with reference to the embodiment shown in the drawings, it should be understood that the present invention can be embodied in many alternate forms of embodiments. In addition, any suitable size, shape or type of elements or materials could be used.

System 100 is a system for providing services, for example, a postal services provider system. System 100 includes one or more remote data processing devices 115₁ ... 115ₙ and a host data processing service 135. In one embodiment the one or more remote data processing devices 115₁ ... 115ₙ, may be postage meters and the host data processing service 135 may be a postal service provider data center.

It is a feature of the present invention for the host data processing service and the remote data processing devices to establish communications between themselves without providing the remote data processing device with prior knowledge as to when to initiate the communication connection.

Host data processing service 135 generally includes a processor 105, a memory 110, and a database 130 for storing information. Processor 105 generally operates under the control of programs stored in memory 110 to manage operations of host data processing service 135. Host data processing service 135 generally provides updates, programs that allow additional functionality, replacement programs, data tables and other data and information to remote remote data processing devices 115₁ ... 115ₙ. In addition, host data processing service 135 may collect data from remote data processing devices 115₁ ... 115ₙ, provide reporting and accounting services, and exchange cryptographically secure data with the remote data processing devices.

Host data processing service 135 may be coupled to a data communications network 120. Data communications network 120 may include any suitable communications network, for example, the Public Switched Telephone Network (PSTN), a wireless network, a wired network, a Local Area Network (LAN), a Wide Area Network (WAN), virtual private network (VPN) etc. Host data processing service 135 may communicate with remote data processing devices 115₁ ... 115ₙ using any suitable protocol, or modulation standard, for example, X.25, ATM, TCP/IP, V34, V90, etc. When data communications network 120 is implemented as a wireless network, it generally incorporates an air interface utilizing any suitable wireless communication protocol or signaling techniques or standards, for example TDMA, CDMA, IEEE 802.11, Bluetooth, close range RF, optical, any appropriate satellite communication standards, etc.

Figure 2 shows a general block diagram of a remote data processing devices 115. Remote data processing devices 115₁ ... 115ₙ generally provide services to one or more customers. In one embodiment, the remote data processing devices may provide indicia that has value, for example, postage, tickets allowing admission to an event or allowing the use of a service, etc. Remote data processing device 115 may also include a microprocessor 118 for performing accounting, control, and handling functions according to programs stored in a storage device 119. Some of these functions or subsets of these functions may be grouped within a secure perimeter as what is commonly referred to as a Postal Security Device (PSD).

Storage device 119 generally stores machine readable program code which is adapted to cause microprocessor 118 to perform functions associated with providing services, for example, producing indicia. Storage device may also include programs for managing secure communications between remote data processing device 115 and host data processing service 135. Storage device 119 may utilize optical, magnetic, semiconductor, electronic, or other types of suitable devices to store the program code.

In accordance with the disclosed embodiments, when the host data processing service center (HDPSC) 135 requires communication with the remote data processing device 115, the HDPSC 135 may operate as follows:

If the remote data processing device 115 is not a "listening device," that is, is not capable of monitoring communications over network 120 and recognizing and acknowledging communications directed to itself, the next time the remote data processing device 115 initiates communication with the HDPSC 135 for service, funding, information request, or the like, the HDPSC 135 will check its database to see if any special actions are required between itself and the calling remote data processing device 115. Should special actions be desired, the HDPSC 135 will append to the remote data processing device 115 message request process, additional messaging information and content as required by the HDPSC 135 to either request data from the remote data processing device 115 or provide data to the remote data processing device 115.

Alternately, if the remote data processing device 115 is a "listening device", that is, is capable of monitoring communications over network 120 and recognizing and acknowledging communications directed to itself, when the HDPSC 135 determines that it is necessary to receive or deliver data to the remote data processing device 115, the HDPSC 135 will initiate communication with the remote data processing device 115 by sending a "request to contact the HDPSC 135". If the remote data processing device 115 is on-line at the time, the remote data processing device 115 will respond by establishing a connection to the HDPSC 135. Should the remote data processing device 115 be off-line, the HDPSC 135 may continue to periodically send the "request to contact the HDPSC 135" until the remote data processing device 115 responds.
It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

## Claims

1. A method of establishing communication between a host data processing service center (135) and a remote data processing device (115) comprising:
appending to a remote data processing device message request process, additional messaging information and content as required by the host data processing service center to either request data from the remote data processing device or provide data to the remote data processing device, if the remote data processing device is not capable of monitoring communications and recognizing and acknowledging communications directed to itself; and
sending the remote data processing device a request to contact the host data processing service center, if the remote data processing device 115 is capable of monitoring communications and recognizing and acknowledging communications directed to itself,
wherein if the remote data processing device is on-line at the time, executing a call to the host data processing service center,
and wherein if the remote data processing device is off-line, periodically re-sending the request to contact the host data processing service center until the remote data processing device responds.

## Patentansprüche

1. Verfahren zum Herstellen einer Verbindung zwischen einem Hostdatenverarbeitungsservicecenter (135) und einer entfernten Datenverarbeitungsvorrichtung (115) umfassend:
Anhängen zusätzlicher Benachrichtigungsinformation und zusätzlichen Inhalts wie von dem Host-Datenverarbeitungsservicecenter gefordert an einen Benachrichtigungsanforderungsprozeß der entfernten Datenverarbeitungsvorrichtung, um entweder Daten von der entfernten Datenverarbeitungsvorrichtung anzufordern oder Daten der entfernten Datenverarbeitungsvorrichtung zur Verfügung zu stellen, falls die entfernte Datenverarbeitungsvorrichtung nicht in der Lage ist, Nachrichten zu überwachen und zu erkennen und an sie selbst gerichtete Nachrichten zu bestätigen, und
Senden einer Anforderung an die entfernte Datenverarbeitungsvorrichtung, das Hostdatenverarbeitungsservicecenter zu kontaktieren, falls die entfernte Datenverarbeitungsvorrichtung (115) in der Lage ist, Nachrichten zu überwachen und zu erkennen und an sie selbst gerichtete Nachrichten zu bestätigen,
wobei ein Anruf bei dem Hostdatenverarbeitungsservicecenter ausgeführt wird, falls die entfernte Datenverarbeitungsvorrichtung zu der Zeit online ist,
und wobei die Anforderung, das Hostdatenverarbeitungsservice zu kontaktieren, periodisch erneut gesendet wird, falls die entfernte Datenverarbeitungsvorrichtung offline ist, bis die entfernte Datenverarbeitungsvorrichtung antwortet.

## Revendications

1. Procédé d'établissement d'une communication entre une centrale de service de traitement de données hôte (135) et un dispositif de traitement de données à distance (115) comprenant :
l'ajout à un processus de demande de message du dispositif de traitement de données à distance d'un contenu et d'informations de messagerie supplémentaires tels que nécessités par la centrale de service de traitement de données hôte pour demander des données en provenance du dispositif de traitement de données à distance ou pour fournir des données au dispositif de traitement de données à distance, si le dispositif de traitement de données à distance n'est pas capable de contrôler les communications ni de reconnaître et d'accuser réception des communications qui lui sont adressées ; et
l'envoi au dispositif de traitement de données à distance d'une demande pour entrer en contact avec la centrale de service de traitement de données hôte, si le dispositif de traitement de données à distance 115 est capable de surveiller les communications et de reconnaître et d'accuser réception des communications qui lui sont adressées,
**caractérisé par**, si le dispositif de traitement de données à distance est en ligne à ce moment, l'exécution d'un appel vers la centrale de service de traitement de données hôte,
et **caractérisé par**, si le dispositif de traitement de données à distance est hors ligne, le renvoi périodique de la demande pour entrer en contact avec la centrale de service de traitement de données hôte jusqu'à ce que le dispositif de traitement de données à distance réponde.
